# EUROPÄISCHE PATENTSCHRIFT

(11) **EP 3 374 991 B1**
(45) Veröffentlichungstag und Bekanntmachung des Hinweises auf die Patenterteilung: **23.10.2019**
(21) Anmeldenummer: 16793892.7
(22) Anmeldetag: 09.11.2016
(51) Int. Cl.: G11B 7/24044, G11B 7/245, G11B 7/254

(54) **KIT-OF-PARTS ENTHALTEND VERSIEGELUNGSSCHICHT UND PHOTOPOLYMER**
KIT OF PARTS CONTAINING SEALING LAYER AND PHOTOPOLYMER
ENSEMBLE DE PIECES COMPRENANT UNE COUCHE COUVRANTE ET PHOTO-POLYMERE

(30) Priorität: 09.11.2015 EP 15193765
(43) Veröffentlichungstag der Anmeldung: 19.09.2018
(73) Patentinhaber: Covestro Deutschland AG, 51373 Leverkusen (DE)
(72) Erfinder: FÄCKE, Thomas, 51375 Leverkusen (DE); KOSTROMINE, Serguei, 53913 Swisttal-Buschhoven (DE); ORSELLI, Enrico, 50677 Köln (DE); FLEMM, Ute, 42697 Solingen (DE)
(74) Vertreter: Levpat
(86) Internationale Anmeldenummer: PCT/EP2016/077139
(87) Internationale Veröffentlichungsnummer: WO 2017/081078

(56) Entgegenhaltungen:
- WO-A1-2014/131795

## Beschreibung

Die Erfindung betrifft einen Kit-of-parts enthaltend mindestens eine Versiegelungsschicht C und ein Photopolymer B, ein Verfahren zur Herstellung eines zumindest teilweise verbundenen Schichtaufbaus aus mindestens 2 Schichten und die Verwendung des Kit-of-parts für das benannte Verfahren.

Photopolymerschichten zur Herstellung holographischer Medien sind grundsätzlich aus der WO 2011/054797 und der WO 2011/067057 bekannt. Vorteile dieser holografischen Medien ist deren hohe diffraktive Lichtbeugungseffizienz und dass keine Nachprozessierungsschritte nach der holografischen Belichtung wie z.B. chemische oder thermische Entwicklungsschritte nötig sind.

In der DE 699 37 920 T2 ist beschrieben, dass holografische Photopolymerschichten ihre Farbe verändern können, wenn aus angrenzenden Schichten wie Klebstoffschichten Substanzen in die Photopolymerschicht einquellen oder aus dieser in die angrenzende Schicht ausbluten. Tritt eines der beiden Phänomene auf, kann es zu einer Volumenexpansion oder einem Volumenschrumpf in der Photopolymerschicht kommen. Dies führt wiederum zu einer langwelligen bzw. kurzwelligen Farbverschiebung des Hologramms. Insbesondere bei Mehrfarbhologrammen bewirkt dies unerwünschte visuelle Farbänderungen.

Um Volumenänderungen und die damit einhergehenden Farbveränderungen zu vermeiden, lehrt DE 699 37 920 T2 den angrenzenden Schichten und/oder der Photopolymerschicht vorab hinreichende Mengen der einquellenden oder ausblutenden Substanzen zuzusetzen. Dieses Verfahren ist jedoch aufwendig. Darüber hinaus muss je nachdem, welches Material für die angrenzende Schicht verwendet werden soll, eine Anpassung vorgenommen werden. Zuletzt muss die zugesetzte Substanz auch so gewählt werden, dass sie die Photopolymerschicht nicht zerstört.

In der Patentanmeldung EP 2613318 B1 ist beschrieben, dass durch geeignete Auswahl der Komponenten Schutzschichten auf eine belichtete Photopolymerschicht aufgebracht werden können. Diese Schutzschichten lassen sich durch Umsetzung wenigstens eines strahlungshärtenden Harzes I), eines Isocyanat-funktionellen Harzes II) und eines Photoinitiatorsystem III) herstellen. Die in EP 2613318 B1 beschriebenen Schutzschichten erfüllen die Voraussetzungen für eine geeignete Schutzschicht, da sie nach Applikation ermöglichen einen Schichtaufbau mit einer Schutzschicht und einer belichteten Photopolymerschicht bereitzustellen, der mit unterschiedlichsten angrenzenden Schichten wie z.B. Klebstoffschichten fest verbunden werden kann, ohne das es zu einer Volumenänderungen der Photopolymerschicht und einer damit einhergehenden Farbveränderungen des Hologramms kommt.

In der EP 2804763 A1 wird gelehrt, dass Schutzlackschichten auch geeignet sind, die wenigstens aus einem strahlungshärtenden Harz I), einem multifunktionellen strahlungshärtenden Harz II) und einem Photoinitiatorsystem III) bestehen und in dem strahlungshärtenden Harz I) ≤ 5 Gew.-% Verbindungen mit einem gewichtsmittleren Molekulargewicht < 500 und ≥ 75 Gew.-% Verbindungen mit einem gewichtsmittleren Molekulargewicht > 1000 enthalten sind, das multifunktionelle strahlungshärtende Harz II) mindestens ein Acrylat mit wenigstens zwei strahlungshärtende Gruppen umfasst oder daraus besteht und in der Mischung mindestens 55 Gew.-% des strahlungshärtenden Harzes I) und maximal 35 Gew.-% des multifunktionellen strahlungshärtenden Harzes II) enthalten sind.

WO2014/131795 A1 offenbart Schutzlacke und Klebstoffe auf Acrylatbasis.

In der industriellen Praxis ist es aufwändig entsprechende Flüssigapplikationsanlagen zu bauen und Personal bereitzustellen, das den Beschichtungsprozess kontrolliert. Laminationsprozesse werden daher bevorzugt. So beschreibt US 6447979B1 ein Verfahren wie ein auf einer Trägerschicht mit Releaseliner (Enthaftungsschicht) positionierter Schutzlack bzw. ein Optisch Variables Device (OVD) mittels einer thermisch aktivierbaren Klebeschicht auf einen Kartengrundkörper appliziert werden kann. Derartige thermisch aktivierbare Schichten ("hotmelt adhesive") finden daher breite Verwendung.

Weiterhin sind in der Displayindustrie optisch klare Klebstofffilme ("OCA", optical clear adhesive) gängig, die das Ankleben ("bonden") von Glasschichten an Displays z.B. für Touchfunktionen ermöglichen. Ein Versiegeln von Volumenhologrammen der oben beschriebenen Natur ist damit nur unter nicht akzeptablen Frequenzänderungen möglich.

Die Aufgabe der vorliegenden Erfindung bestand somit darin, für derartige belichtete Photopolymerfilme, die keine Nachprozessierungsschritte nach der holografischen Belichtung mehr benötigen, eine Lösung bereitzustellen, nach der diese in einem einfachen Arbeitsschritt versiegelt werden können, ohne dabei eine nachteilhafte Farbverschiebung von mehr als 10 nm, bevorzugt von mehr als 5 nm oder aber eine Linienformveränderung erzeugt und eine ausgezeichnete Haftung zwischen dem Photopolymer und dem Versiegelungslack erhalten wird.

Die Aufgabe wurde gelöst mittels eines Kit-of-part enthaltend mindestens eine Versiegelungsschicht C und ein flächig vorliegendes Photopolymer B.

Der Vorteil des erfindungsgemäßen Kit-of-parts besteht darin, dass er nach der Belichtung des Photopolymeren auf einfache Art die Versiegelung eines belichteten Hologramms ermöglicht, die keine aufwändigen Maschinen oder besonders geschultes Personal erfordert, wobei die Komponenten B und C so aufeinander abgestimmt sind, dass sie einerseits eine gute Haftung ermöglichen und gleichzeitig einer Frequenzstabilität/Gitterstabilität des Holograms und einen Schutz vor chemischer, physikalischer und mechanischer Beanspruchung gewährleisten. Zusätzlich wird durch die Versiegelungsschicht eine Kompatibiltät zu weiteren Schichten ermöglicht sowie eine generelle verbesserte Handhabbarkeit des Hologramms, so z. B. ein Schutz gegen Verstauben durch Unterbindung von Restklebrigkeit oder durch Antistatik Ausrüstung der Versiegelungsschicht zugänglich.

Unter "flächig vorliegend" im Sinne der Erfindung wird eine Ausgestaltung als ebene Fläche oder auch als konkav oder konvex gewölbte oder wellige Fläche verstanden. Im Sinne der Erfindung muss das das Hologramm enthaltende Photopolymer B insofern eine ebene, gewölbete oder gewellte Fläche aufweisen, dass eine Auflaminierung der Versiegelungsschicht zumindest im Bereich des Hologramms möglich wird.

In einer Ausführungsform der Erfindung liegt das Photopolymer B als Schicht vor. Vorzugsweise liegt die Photopolymer enthaltende Schicht B auf einer vorzugsweise transparenten thermoplastischen Substratfolie A oder auf einem anderen Träger wie z.B. Glas, Kunststoff, Metall oder Holz vor.

In einer weiteren Ausführungsform liegt die Versiegelungsschicht C auf einer Trägerfolie D vor.

In einer weiteren Ausführungsform weist die Versiegelungsschicht C eine Dicke kleiner 50 µm auf. Die Viskosität ungehärteten Versiegelungsschicht C vor Aushärtung und Trocknung liegt vorzugsweise von 2000 Pa s bis 2 Mio Pa s, vorzugsweise 4000 Pa s bis 1,6 Mio Pa s. Die Versiegelungsschicht C umfasst ein physikalisch trocknendes Harz C1, einen acryl- oder methacrylfunktionellen Reaktivverdünner C2 und einen Photoinitiator C3.

In einer anderen Ausführungsform der Erfindung liegen die Bestandteile Photopolymer B und Versiegelungsschicht C - optional etweder eines oder beide geträgert - des Kit-of-parts in der gleichen Verpackung vor. Es kann vorteilhaft sein, diese getrennt zu verpacken, aber in einem Gebinde zusammenzufassen. Außerdem kann es für die Verarbeitung vorteilhaft sein, wenn Photopolymerschicht B und Versiegelungsschicht C die gleichen Maße aufweisen. Vorzugsweise liegen beide Photopolymerschicht B und Versiegelungsschicht C geträgert vor.

Ebenfalls Gegenstand der Erfindung ist ein Verfahren zur Herstellung eines zumindest teilweise verbundenen Aufbaus aus mindestens 2 Schichten, enthaltend
a) ein flächig vorliegendes Photopolymer B enthaltend ein Volumenhologramm und
b) mindestens einer zumindest teilweise durch aktinische Strahlung gehärtete Versiegelungsschicht C,
   dadurch gekennzeichnet, dass
   - das ein Volumenhologram enthaltende Photopolymere B eine vernetzte Matrix umfasst;
   - die Versiegelungsschicht C eine Dicke kleiner 50 µm aufweist undeine Viskosität von 2000 Pa s bis 2 Mio Pa s, vorzugsweise 4000 Pa s bis 1,6 Mio Pa s aufweist und ein physikalisch trocknendes Harz C1, einen acryl- oder methacrylfunktionellen Reaktivverdünner C2 und einen Photoinitiator C3 umfasst;
   - und die Versiegelungschicht C auf das Photopolymer B laminiert wird und
   - danach mit aktinischer Strahlung gehärtet wird.

In einer Ausführungsform des erfinderischen Verfahren liegt das Photopolymer B als Schicht vor. Bevorzugt liegt das Photopolymer B als Schicht auf einer vorzugsweise transparenten thermoplastischen Substratfolie A oder auf einem anderen Träger wie z.B. Glas, Kunststoff, Metall oder Holz vor.

In einer weiteren Ausführungsform des Verfahrens liegt die Versiegelungsschicht C auf einer Trägerfolie D vor.

In einer weiteren Ausführungsform der Erfindung dient das erfinderische Verfahren zur Herstellung eines zumindest teilweise verbundenen Aufbaus aus mindestens 3 Schichten enthaltend ein flächig vorliegendes Photopolymer B enthaltend ein Volumenhologramm, mindestens eine zumindest teilweise durch aktinische Strahlung gehärtete Versiegelungsschicht C und eine Trägerfolie D.

Dabei können die Schichten in der Reihenfolge B, C und D angeordnet sein.

Zusätzlich kann auch eine weitere Versiegelungsschicht auf die Rückseite des dann beidseitig flächig vorliegenden Photopolymeren B auflaminiert werden. Dabei können die Schichten dann in der Reihenfolge D-C-B-C-D angeordnet sein.

In einer anderen Ausführungsform der Erfindung dient das erfinderische Verfahren zur Herstellung eines zumindest teilweise verbundenen Aufbaus aus mindestens 4 Schichten enthaltend eine auf eine Substratfolie A aufgebrachte, aus einem Photopolymer bestehende Schicht B enthaltend ein Volumenhologramm, mindestens eine zumindest teilweise durch aktinische Strahlung gehärtete Versiegelungsschicht C und eine Trägerfolie D.

Die Schichten können in diesem Fall in der Reihenfolge A, B, C und D angeordnet sein.

In einer Ausführungsform des Verfahrens wird die Versiegelungsschicht C nach der Laminierung auf die Photopolymerschicht B innerhalb von 60 Minuten, vorzugsweise innerhalb von 5 Minuten, besonders bevorzugt innerhalb weniger als 60 Sekunden zumindest teilweise aktinisch gehärtet.

In einer anderen Ausführungsform des Verfahrens kann die Schicht D oder können die Schichten D nach der zumindest teilweisen Aushärtung der Versiegelungsschicht C zumindest teilweise delaminiert werden.

Materialien oder Materialverbünde der thermoplastischen Substratfolie A basieren auf Polycarbonat (PC), Polyethylenterephthalat (PET), amorphe Polyester, Polybutylenterephthalat, Polyethylen, Polypropylen, Celluloseacetat, Cellulosehydrat, Cellulosenitrat, Cycloolefinpolymere, Polystyrol, hydriertem Polystyrol, Polyepoxide, Polysulfon, thermoplastisches Polyurethan (TPU), Cellulosetriacetat (CTA), Polyamid (PA), Polymethylmethacrylat (PMMA), Polyvinylchlorid, Polyvinylacetat, Polyvinylbutyral oder Polydicyclopentadien oder deren Mischungen. Besonders bevorzugt basieren sie auf PC, PET, PA, PMMA und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PMMA, PC/PA, PC/PET, PET/PC/PET und PC/TPU. Vorzugsweise ist Substratfolie A im spektralen Bereich von 400-800 nm transparent.

Photopolymere B umfassen Matrixpolymere, Schreibmonomere und Photoinitiatoren. Als Matrixpolymere können amorphe Thermoplaste wie z.B. Polyacrylate, Polymethylmethacrylate oder Copolymere von Methylmethacrylat, Methacrylsäure oder andere Alkylacrylate und Alkylmethacrylate sowie Acrylsäure, wie z.B. Polybutylacrylat, weiterhin Polyvinylacetat und Polyvinylburyrat seine partiell hydrolysierten Derivate wie Polyvinylalkohole sowie Copolymerisate mit Ethylene und/oder weiteren (Meth)acrylaten, Gelatine, Celluloseester und Celluloseether wie Methylcellulose, Celluloseacetobutyrat, Silikone, wie z.B. Polydimethylsilicon, Polyurethane, Polybutadiene und Polyisoprene, sowie Polyethylenoxide, Epoxyharze, insbesondere aliphatische Epoxyharze, Polyamide, Polycarbonate sowie die in US 4994347A und darin zitierten Systeme verwendet werden.

Besonders bevorzugt ist aber, wenn die Matrixpolymere Polyurethane sind.

Besonders bevorzugt ist auch, wenn die Matrixpolymere vernetzt sind. Insbesondere bevorzugt ist dabei, wenn die Matrixpolymere dreidimensional vernetzt sind.

Epoxyharze können kationisch mit sich selbst vernetzt werden. Weiterhin können auch Säure/anhydride, Amine, Hydoxyalkylamide sowie Thiole als Vernetzer eingesetzt werden.

Silicone können sowohl als Einkomponentensysteme durch Kondensation bei Anwesenheit von Wasser (und ggf. unter Broenstedtsäurenkatalyse) oder als zweikomponentige Systeme durch Zugabe von Kieselsäureester oder zinnorganische Verbindungen vernetzt werden. Ebenso ist die Hydrosilylierungen in Vinyl-Silansystemen möglich.

Ungesättigte Verbindungen, wie z.B. Acryloyl funktionelle Polymere oder ungesättigte Ester können mit Aminen oder Thiolen vernetzt werden. Eine kationische Vinyletherpolymerisation ist auch möglich.

Insbesondere bevorzugt ist aber, wenn die Matrixpolymere vernetzt, bevorzugt dreidimensional vernetzt und ganz besonders bevorzugt dreidimensional vernetzte Polyurethane sind. Polyurethan-Matrixpolymere sind insbesondere durch Umsetzung wenigstens einer Polyisocyanat-Komponente a) mit wenigstens einer Isocyanat-reaktiven-Komponente b) erhältlich.

Die Polyisocyanat-Komponente a) umfasst wenigstens eine organische Verbindung mit wenigstens zwei NCO-Gruppen. Bei diesen organischen Verbindungen kann es sich insbesondere um monomere Di- und Triisocyanate, Polyisocyanate und / oder NCO-funktionelle Prepolymere handeln. Die Polyisocyanat-Komponente a) kann auch Mischungen monomerer Di- und Triisocyanate, Polyisocyanate und / oder NCO-funktioneller Prepolymere enthalten oder daraus bestehen.

Als monomere Di- und Triisocyanate können alle dem Fachmann an sich gut bekannten Verbindungen oder deren Mischungen eingesetzt werden. Diese Verbindungen können aromatische, araliphatische, aliphatische oder cycloaliphatische Strukturen aufweisen. In untergeordneten Mengen können die monomeren Di- und Triisocyanate auch Monoisocyanate, d.h. organische Verbindungen mit einer NCO-Gruppe umfassen.

Beispiele für geeignete monomere Di- und Triisocyanate sind 1,4-Butandiisocyanat, 1,5-Pentandiisocyanat, 1,6-Hexandiisocyanat (Hexamethylendiisocyanat, HDI), 2,2,4-Trimethylhexamethylendiisocyanat und / oder 2,4,4-Trimethylhexamethylendiisocyanat (TMDI), Isophorondiisocyanat (IPDI), 1,8-Diisocyanato-4-(isocyanatomethyl)-octan, Bis-(4,4'-isocyanatocyclohexyl)methan und / oder Bis-(2',4-isocyanatocyclohexyl)methan und / oder deren Mischungen beliebigen Isomerengehalts, 1,4-Cyclohexandiisocyanat, die isomeren Bis-(isocyanatomethyl)cyclohexane, 2,4- und / oder 2,6-Diisocyanato-1-methylcyclohexan (Hexahydro-2,4- und / oder 2,6-toluylendiisocyanat, H₆-TDI), 1,4-Phenylendiisocyanat, 2,4- und / oder 2,6-Toluylendiisocyanat (TDI), 1,5-Naphthylendiisocyanat (NDI), 2,4'- und / oder 4,4'-Diphenylmethandiisocyanat (MDI), 1,3-Bis(isocyanatomethyl)benzol (XDI) und / oder das analoge 1,4-Isomere oder beliebige Mischungen der vorgenannten Verbindungen.

Geeignete Polyisocyanate sind Verbindungen mit Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen, die aus den vorgenannten Di- oder Triisocyanaten erhältlich sind.

Besonders bevorzugt handelt es sich bei den Polyisocyanaten um oligomerisierte aliphatische und / oder cycloaliphatische Di- oder Triisocyanate, wobei insbesondere die oben stehenden aliphatischen und / oder cycloaliphatischen Di- oder Triisocyanate verwendet werden können.

Ganz besonders bevorzugt sind Polyisocyanate mit Isocyanurat-, Uretdion- und / oder Iminooxadiazindion-Strukturen sowie Biurete basierend auf HDI oder deren Mischungen.

Geeignete Prepolymere enthalten Urethan- und / oder Harnstoff-Gruppen sowie gegebenenfalls weitere durch Modifizierung von NCO-Gruppen entstandene Strukturen wie oben genannt. Derartige Prepolymere sind beispielsweise durch Umsetzung der oben genannten monomeren Di- und Triisocyanate und / oder Polyisocyanaten a1) mit isocyanatreaktiven Verbindungen b1) erhältlich.

Als isocyanatreaktive Verbindungen b1) können Alkohole, Amino oder MercaptoVerbindungen, bevorzugt Alkohole, verwendet werden. Dabei kann es sich insbesondere um Polyole handeln. Ganz besonders bevorzugt können als isocyanatreaktive Verbindung b1) Polyester-, Polyether-, Polycarbonat-, Poly(meth)acrylat- und/oder Polyurethan-Polyole verwendet werden.

Als Polyesterpolyole sind beispielsweise lineare Polyesterdiole oder verzweigte Polyesterpolyole geeignet, die in bekannter Weise durch Umsetzung von aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden können. Beispiele für geeignete Di- bzw. Polycarbonsäuren sind mehrwertige Carbonsäuren wie Bernstein-, Adipin-, Kork-, Sebacin-, Decandicarbon-, Phthal-, Terephthal-, Isophthal- Tetrahydrophthal- oder Trimellithsäure sowie Säureanhydride wie Phthal-, Trimellith- oder Bernsteinsäureanhydrid oder deren beliebige Gemische untereinander. Die Polyesterpolyole können auch auf natürlichen Rohstoffen wie Rizinusöl basieren. Es ist ebenfalls möglich, dass die Polyesterpolyole auf Homo- oder Mischpolymerisaten von Lactonen basieren, die bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2 beispielsweise der nachstehend genannten Art erhalten werden können.

Beispiele für geeignete Alkohole sind alle mehrwertigen Alkohole wie z.B. die C₂ - C₁₂-Diole, die isomeren Cyclohexandiole, Glycerin oder deren beliebige Gemische untereinander.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkohole einer OH-Funktionalität ≥ 2, bevorzugt Butandiol-1,4, Hexandiol-1,6 und / oder 3-Methylpentandiol. Auch Polyesterpolyole können zu Polycarbonatpolyolen umgearbeitet werden.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden. Besonders bevorzugt sind Propylenoxid-homopolymere sowie statistische oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen umfasst hierbei alle jeweiligen linearen und verzweigten C₃- und C₄-Isomere.

Daneben sind als Bestandteile der Polyol-Komponente b1) als polyfunktionelle, isocyanatreaktive Verbindungen auch niedermolekulare, d.h. mit Molekulargewichten ≤ 500 g/mol, kurzkettige, d.h. 2 bis 20 Kohlenstoffatome enthaltende aliphatische, araliphatische oder cycloaliphatische di-, tri- oder polyfunktionelle Alkohole geeignet.

Dies können beispielsweise in Ergänzung zu den oben genannten Verbindungen Neopentylglykol, 2-Ethyl-2-butylpropandiol, Trimethylpentandiol, stellungs-isomere Diethyloctandiole, Cyclohexandiol, 1,4-Cyclohexandimethanol, 1,6-Hexandiol, 1,2- und 1,4-Cyclohexandiol, hydriertes Bisphenol A, 2,2-Bis(4-hydroxy-cyclohexyl)-propan oder 2,2-Dimethyl-3-hydroxypropionsäure, 2,2-dimethyl-3-hydroxypropyl-ester sein. Beispiele geeigneter Triole sind Trimethylolethan, Trimethylolpropan oder Glycerin. Geeignete höherfunktionelle Alkohole sind Di-(trimethylolpropan), Pentaerythrit, Dipenta-erythrit oder Sorbit.

Besonders bevorzugt ist, wenn die Polyolkomponente ein difunktioneller Polyether-, Polyester oder ein Polyether-polyester-block-copolyester oder ein Polyether-Polyester-Blockcopolymer mit primären OH-Funktionen ist.

Es ist ebenfalls möglich, als isocyanatreaktive Verbindungen b1) Amine einzusetzen. Beispiele geeigneter Amine sind Ethylendiamin, Propylendiamin, Diaminocyclohexan, 4,4'-Dicylohexylmethandiamin, Isophorondiamin (IPDA), difunktionelle Polyamine wie z.B. die Jeffamine®, aminterminierte Polymere, insbesondere mit zahlenmittleren Molmassen ≤ 10000 g/Mol. Mischungen der vorgenannten Amine können ebenfalls verwendet werden.

Es ist ebenfalls möglich, als isocyanatreaktive Verbindungen b1) Aminoalkohole einzusetzen. Beispiele geeigneter Aminoalkohole sind die isomeren Aminoethanole, die isomere Aminopropanole die isomeren Aminobutanole und die isomeren Aminohexanole oder deren beliebige Mischungen.

Alle vorgenannten isocyanatreaktiven Verbindungen b1) können untereinander beliebig vermischt werden.

Bevorzugt ist auch, wenn die isocyanatreaktiven Verbindungen b1) eine zahlenmittlere Molmasse von ≥ 200 und ≤ 10000 g/Mol, weiter bevorzugt ≥ 500 und ≤ 8000 g/Mol und ganz besonders bevorzugt ≥ 800 und ≤ 5000 g/Mol aufweisen. Die OH-Funktionalität der Polyole beträgt bevorzugt 1.5 bis 6.0, besonders bevorzugt 1.8 bis 4.0.

Die Prepolymere der Polyisocyanat-Komponente a) können insbesondere einen Restgehalt an freiem monomeren Di- und Triisocyanaten < 1 Gew.-%, besonders bevorzugt < 0.5 Gew.-% und ganz besonders bevorzugt < 0.3 Gew.-% aufweisen.

Es ist gegebenenfalls auch möglich, dass die Polyisocyanat-Komponente a) vollständig oder anteilsmäßig organische Verbindung enthält, deren NCO-Gruppen ganz oder teilweise mit aus der Beschichtungstechnologie bekannten Blockierungsmitteln umgesetzt sind. Beispiel für Blockierungsmittel sind Alkohole, Lactame, Oxime, Malonester, Pyrazole sowie Amine, wie z.B. Butanonoxim, Diisopropylamin, Malonsäurediethylester, Acetessigester, 3,5-Dimethylpyrazol, ε-Caprolactam, oder deren Mischungen.

Besonders bevorzugt ist, wenn die Polyisocyanat-Komponente a) Verbindungen mit aliphatisch gebundenen NCO-Gruppen umfasst, wobei unter aliphatisch gebundenen NCO-Gruppen derartige Gruppen verstanden werden, die an ein primäres C-Atom gebunden sind. Die isocyanatreaktive Komponente b) umfasst bevorzugt wenigstens eine organische Verbindung, die im Mittel wenigstens 1.5 und bevorzugt 2 bis 3 isocyanatreaktive Gruppen aufweist. Im Rahmen der vorliegenden Erfindung werden als isocyanatreaktive Gruppen bevorzugt Hydroxy-, Amino- oder Mercapto-Gruppen angesehen.

Die isocyanatreaktive Komponente kann insbesondere Verbindungen umfassen, die im Zahlenmittel wenigstens 1.5 und bevorzugt 2 bis 3 isocyanatreaktive Gruppen aufweisen.

Geeignete polyfunktionelle, isocyanatreaktive Verbindungen der Komponente b) sind beispielsweise die oben beschriebenen Verbindungen b1).

Ganz besonders bevorzugt ist auch, wenn die Polyurethane auf Polyester-C4-Polyetherpolyolen basieren.

Photoinitiatoren der Komponente sind üblicherweise durch aktinische Strahlung aktivierbare Verbindungen, die eine Polymerisation der Schreibmonomere auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden.

Typ I-Photoinitiatoren (Norrish-Typ-I) für die radikalische Photopolymerisation bilden beim Bestrahlen durch eine unimolekulare Bindungsspaltung freie Radikale. Beispiele für Typ I-Photoinitiatoren sind Triazine, Oxime, Benzoinether, Benzilketale, Bis-imidazole, Aroylphosphinoxide, Sulfonium- und Iodoniumsalze.

Typ II-Photoinitiatoren (Norrish-Typ-II) für die radikalische Polymerisation bestehen aus einem Farbstoff als Sensibilisator und einem Coinitiator und durchlaufen bei der Bestrahlung mit auf den Farbstoff angepasstem Licht eine bimolekulare Reaktion. Zunächst absorbiert der Farbstoff ein Photon und überträgt aus einem angeregten Zustand Energie auf den Coinitiator. Dieser setzt durch Elektronen- oder Protonentransfer oder direkte Wasserstoffabstraktion die polymerisationsauslösenden Radikale frei.

Im Sinne dieser Erfindung werden bevorzugt Typ II-Photoinitiatoren verwendet.

Solche Photoinitiatorsysteme sind prinzipiell in der EP 0 223 587 A beschriebenen und bestehen bevorzugt aus einer Mischung von einem oder mehreren Farbstoffen mit Ammoniumalkylarylborat(en).

Geeignete Farbstoffe, die zusammen mit einem Ammoniumalkylarylborat einen Typ II-Photoinitiator bilden, sind die in der WO 2012062655 beschriebenen kationischen Farbstoffe in Kombination mit den eben dort beschriebenen Anionen.

Unter kationischen Farbstoffen werden bevorzugt solche der folgenden Klassen verstanden: Acridin-Farbstoffe, Xanthen-Farbstoffe, Thioxanthen-Farbstoffe, Phenazin-Farbstoffe, Phenoxazin-Farbstoffe, Phenothiazin-Farbstoffe, Tri(het)arylmethan-Farbstoffe - insbesondere Diamino- und Triamino(het)arylmethan-Farbstoffe, Mono-, Di-, Tri- und Pentamethincyanin-Farbstoffe, Hemicyanin-Farbstoffe, extern kationische Merocyanin-Farbstoffe, extern kationische Neutrocyanin-Farbstoffe, Nullmethin-Farbstoffe - insbesondere Naphtholactam-Farbstoffe, Streptocyanin-Farbstoffe. Solche Farbstoffe sind beispielsweise in H. Berneth in Ullmann's Encyclopedia of Industrial Chemistry, Azine Dyes, Wiley-VCH Verlag, 2008, H. Berneth in Ullmann's Encyclopedia of Industrial Chemistry, Methine Dyes and Pigments, Wiley-VCH Verlag, 2008, T. Gessner, U. Mayer in Ullmann's Encyclopedia of Industrial Chemistry, Triarylmethane and Diarylmethane Dyes, Wiley-VCH Verlag, 2000 beschrieben.

Besonders bevorzugt sind Phenazin-Farbstoffe, Phenoxazin-Farbstoffe, Phenothiazin-Farbstoffe, Tri(het)arylmethan-Farbstoffe - insbesondere Diamino- und Triamino(het)aryl-methan-Farbstoffe, Mono-, Di-, Tri- und Pentamethincyanin-Farbstoffe, Hemicyanin-Farbstoffe, Nullmethin-Farbstoffe - insbesondere Naphtholactam-Farbstoffe, Streptocyanin-Farbstoffe.

Beispiele für kationische Farbstoffe sind Astrazon Orange G, Basic Blue 3, Basic Orange 22, Basic Red 13, Basic Violett 7, Methylenblau, Neu Methylenblau, Azur A, 2,4-Diphenyl-6-(4-methoxyphenyl)pyrylium, Safranin O, Astraphloxin, Brilliant Grün, Kristallviolett, Ethylviolett und Thionin.

Bevorzugte Anionen sind insbesondere C₈- bis C₂₅-Alkansulfonat, vorzugsweise C₁₃- bis C₂₅-Alkansulfonat, C₃- bis C₁₈-Perfluoralkansulfonat, C₄- bis C₁₈-Perfluoralkansulfonat, das in der Alkylkette mindestens 3 Wasserstoffatome trägt, C₉- bis C₂₅-Alkanoat, C₉- bis C₂₅-Alkenoat, C₈- bis C₂₅-Alkylsulfat, vorzugsweise C₁₃- bis C₂₅-Alkylsulfat, C₈- bis C₂₅-Alkenylsulfat, vorzugsweise C₁₃- bis C₂₅-Alkenylsulfat, C₃- bis C₁₈-Perfluoralkylsulfat, C₄-bis C₁₈-Perfluoralkylsulfat, das in der Alkylkette mindestens 3 Wasserstoffatome trägt, Polyethersulfate basierend auf mindestens 4 Äquivalenten Ethylenoxid und/oder Äquivalenten 4 Propylenoxid, Bis-C₄- bis C₂₅-Alkyl-, C₅- bis C₇-Cycloalkyl-, C₃- bis Cs-Alkenyl- oder C₇-bis C₁₁-Aralkyl-sulfosuccinat, durch mindestens 8 Fluoratome substituiertes Bis-C₂- bis C₁₀-alkyl-sulfosuccinat, C₈- bis C₂₅-Alkyl-sulfoacetate, durch mindestens einen Rest der Gruppe Halogen, C₄- bis C₂₅-Alkyl, Perfluor-C₁- bis C₈-Alkyl und/oder C₁- bis C₁₂-Alkoxycarbonyl substituiertes Benzolsulfonat, ggf. durch Nitro, Cyano, Hydroxy, C₁- bis C₂₅-Alkyl, C₁- bis C₁₂-Alkoxy, Amino, C₁- bis C₁₂-Alkoxycarbonyl oder Chlor substituiertes Naphthalin- oder Biphenylsulfonat, ggf. durch Nitro, Cyano, Hydroxy, C₁- bis C₂₅-Alkyl, C₁- bis C₁₂-Alkoxy, C₁- bis C₁₂-Alkoxycarbonyl oder Chlor substituiertes Benzol-, Naphthalin- oder Biphenyldisulfonat, durch Dinitro, C₆- bis C₂₅-Alkyl, C₄- bis C₁₂-Alkoxycarbonyl, Benzoyl, Chlorbenzoyl oder Toluoyl substituiertes Benzoat, das Anion der Naphthalindicarbonsäure, Diphenyletherdisulfonat, sulfonierte oder sulfatierte, ggf. mindestens einfach ungesättigte C₈- bis C₂₅-Fettsäureester von aliphatischen C₁- bis C₈-Alkoholen oder Glycerin, Bis-(sulfo-C₂- bis C₆-alkyl)-C₃- bis C₁₂-alkandicarbonsäureester, Bis-(sulfo-C₂- bis C₆-alkyl)-itaconsäureester, (Sulfo-C₂- bis C₆-alkyl)-C₆- bis C₁₈-alkancarbonsäureester, (Sulfo-C₂- bis C₆-alkyl)-acryl- oder methacrylsäureester, ggf. durch bis zu 12 Halogenreste substituiertes Triscatecholphosphat, ein Anion der Gruppe Tetraphenylborat, Cyanotriphenylborat, Tetraphenoxyborat, C₄- bis C₁₂-Alkyl-triphenylborat, deren Phenyl- oder Phenoxy-Reste durch Halogen, C₁- bis C₄-Alkyl und/oder C₁- bis C₄-Alkoxy substituiert sein können, C₄- bis C₁₂-Alkyl-trinaphthylborat, Tetra-Ci- bis C₂₀-alkoxyborat, 7,8- oder 7,9-Dicarba-nido-undecaborat(1-) oder (2-), die gegebenenfalls an den B- und/oder C-Atomen durch eine oder zwei C₁- bis C₁₂-Alkyl- oder Phenyl-Gruppen substituiert sind, Dodecahydro-dicarbadodecaborat(2-) oder B-C₁- bis C₁₂-Alkyl-C-phenyl-dodecahydro-dicarbadodecaborat(1-) steht, wobei bei mehrwertigen Anionen wie Naphthalindisulfonat A⁻ für ein Äquivalent dieses Anions steht, und wobei die Alkan- und Alkylgruppen verzweigt sein können und/oder durch Halogen, Cyano, Methoxy, Ethoxy, Methoxycarbonyl oder Ethoxycarbonyl substituiert sein können.

Bevorzugt ist auch, wenn das Anion A⁻ des Farbstoffs einen AClogP im Bereich von 1 bis 30, besonders bevorzugt im Bereich von 1 bis 12 und insbesondere bevorzugt im Bereich von 1 bis 6,5 aufweist. Der AClogP wird nach J. Comput. Aid. Mol. Des. 2005, 19, 453; Virtual Computational Chemistry Laboratory, http://www.vcclab.org berechnet.

Geeignete Ammoniumalkylarylborate sind beispielsweise (Cunningham et al., RadTech'98 North America UV/EB Conference Proceedings, Chicago, Apr. 19-22, 1998): Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenyl-butylborat, Tetrabutylammonium Tris-(3-fluorphenyl)-hexylborat hexylborat ([191726-69-9], CGI 7460, Produkt der BASF SE, Basel, Schweiz), 1-Methyl-3-octylimidazolium Dipentyldiphenylborat und Tetrabutylammonium Tris-(3-chlor-4-methylphenyl)-hexylborat ([1147315-11-4], CGI 909, Produkt der BASF SE, Basel, Schweiz).

Es kann vorteilhaft sein, Gemische dieser Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Bevorzugt ist auch, wenn wenigstens ein für eine Laserlichtfarbe ausgewählt aus blau, grün und rot geeigneter Photoinitiator in der Photopolymer-Formulierung enthalten ist.

Weiter bevorzugt ist auch, wenn die Photopolymer-Formulierung für wenigstens zwei Laserlichtfarben ausgewählt aus blau, grün und rot je einen geeigneten Photoinitiator enthält.

Ganz besonders bevorzugt ist schließlich, wenn die Photopolymer-Formulierung für jede der Laserlichtfarben blau, grün und rot jeweils einen geeigneten Photoinitiator enthält.

Besonders hohe Brechungsindexkontraste können erzielt werden, wenn die Photopolymer-Formulierung ein acrylat- oder methacrylatfunktionelles Schreibmonomer umfasst. Besonders bevorzugt sind dabei monofunktionelle Schreibmonomere und insbesondere diejenigen monofunktionellen Urethan(meth)acrylate, die in der US 2010/0036013 A1 beschrieben sind.

Geeignete Acrylat-Schreibmonomere sind insbesondere Verbindungen der allgemeinen Formel (I) 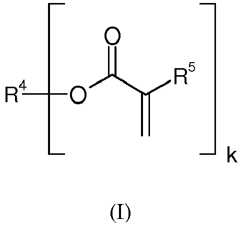 bei denen k≥1 und k≤4 ist und R⁴ ein linearer, verzweigter, cyclischer oder heterocyclischer unsubstituierter oder gegebenenfalls auch mit Heteroatomen substituierter organischer Rest und/oder R⁵ Wasserstoff, ein linearer, verzweigter, cyclischer oder heterocyclischer unsubstituierter oder gegebenenfalls auch mit Heteroatomen substituierter organischer Rest ist. Besonders bevorzugt ist R⁵ Wasserstoff oder Methyl und/oder R⁴ ein linearer, verzweigter, cyclischer oder heterocyclischer unsubstituierter oder gegebenenfalls auch mit Heteroatomen substituierter organischer Rest.

Als Acrylate bzw. Methacrylate werden vorliegend Ester der Acrylsäure bzw. Methacrylsäure bezeichnet. Beispiele bevorzugt verwendbarer Acrylate und Methacrylate sind Phenylacrylat, Phenylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Bisphenol A Diacrylat, Bisphenol A Dimethacrylat, sowie deren ethoxylierte Analogverbindungen, N-Carbazolylacrylate.

Als Urethanacrylate werden vorliegend Verbindungen mit mindestens einer Acrylsäureestergruppe und mindestens eine Urethanbindung verstanden. Solche Verbindungen können beispielsweise durch Umsetzung eines Hydroxy-funktionellen Acrylats oder Methacrylats mit einer Isocyanat-funktionellen Verbindung erhalten werden.

Beispiele hierfür verwendbarer Isocyanat-funktionelle Verbindungen sind Monoisocyanate sowie die unter a) genannten monomeren Diisocyanate, Triisocyanate und / oder Polyisocyanate. Beispiele geeigneter Monoisocyanate sind Phenylisocyanat, die isomeren Methylthiophenylisocyanate. Di-, Tri- oder Polyisocyanate sind oben genannt sowie Triphenylmethan-4,4',4"-triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische Di-, Tri- oder Polyisocyanate.

Als hydroxyfunktionelle Acrylate oder Methacrylate für die Herstellung von Urethanacrylaten kommen beispielsweise Verbindungen wie 2-Hydroxyethyl(meth)acrylat, Polyethylenoxid-mono(meth)acrylate, Polypropylenoxidmono(meth)acrylate, Polyalkylen-oxidmono(meth)-acrylate, Poly(e-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylat.

Ebenfalls verwendet werden können die an sich bekannten hydroxylgruppenhaltigen Epoxy-(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und / oder m-Methylthiophenylisocyanat und/oder o-Phenylthiophenylacrylat und/oder o-Biphenylacrylat mit alkoholfunktionellen Acrylaten wie Hydroxyethyl(meth)acrylat, Hydroxypropyl(meth)acrylat und / oder Hydroxybutyl(meth)-acrylat.

Ebenso ist es möglich, dass das Schreibmonomer weitere ungesättigte Verbindungen wie α,β-ungesättigte Carbonsäurederivate wie beispielsweise Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol und / oder Olefine, umfasst oder daraus besteht.

Gemäß einer weiteren bevorzugten Ausführungsform ist vorgesehen, dass das Photopolymer zusätzlich monomere Fluorurethane umfasst.

Besonders bevorzugt ist, wenn die Fluorurethane wenigstens eine Verbindung der Formel (II) 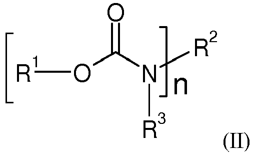 umfassen oder daraus bestehen, in der n ≥ 1 und n ≤ 8 ist und R¹, R², R³ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste R¹, R², R³ mit wenigstens einem Fluoratom substituiert ist und besonders bevorzugt R¹ ein organischer Rest mit mindestens einem Fluoratom ist.

Gemäß einer weiteren bevorzugten Ausführungsform der Erfindung ist vorgesehen, dass das Photopolymer 10 bis 89,999 Gew.-%, bevorzugt 20 bis 70 Gew.-% Matrixpolymere, 3 bis 60 Gew.-%, bevorzugt 10 bis 50 Gew.-% Schreibmonomere, 0,001 bis 5 Gew.-%, bevorzugt 0,5 bis 3 Gew.-% Photoinitiatoren und gegebenenfalls 0 bis 4 Gew.-%, bevorzugt 0 bis 2 Gew.-% Katalysatoren, 0 bis 5 Gew.-% , bevorzugt 0,001 bis 1 Gew.-% Stabilisatoren, 0 bis 40 Gew.-%, bevorzugt 10 bis 30 Gew.-% monomere Fluorurethane und 0 bis 5 Gew.-%, bevorzugt 0.1 bis 5 Gew.-% weitere Additive enthält, wobei die Summe aller Bestandteile 100 Gew.-% beträgt.

Besonders bevorzugt werden Photopolymer mit 20 bis 70 Gew.-% Matrixpolymeren, 20 bis 50 Gew.-% Schreibmonomere, 0,001 bis 5 Gew.-% Photoinitiatoren, 0 bis 2 Gew.-% Katalysatoren, 0,001 bis 1 Gew.-% Radikalstabilisatoren gegebenenfalls 10 bis 30 Gew.-% Fluorurethane und gegebenenfalls 0.1 bis 5 Gew.-% weiterer Additive eingesetzt.

Als Katalysatoren können Urethanisierungskatalysatoren, wie z.B. organische oder anorganischen Derivate des Bimuths, des Zinns, des Zinks oder des Eisens (siehe dazu auch die in der US 2012/062658 genannten Verbindungen) verwendet werden. Besonders bevorzugte Katalysatoren sind Butylzinn-tris(2-ethylhexanoat), Eisen(III) - tris-acetylacetonat, Bismuth(III) tris(2-ethylhexanoat), und Zinn(II) bis(2-ethylhexanoat). Weiterhin können auch sterisch gehinderte Amine als Katalysatoren eingesetzt werden.

Als Stabilisatoren können Radikalinhibitoren wie HALS-Amine, N-Alkyl-HALS-, N-Alkoxy-HALS- und N-Alkoxyethyl-HALS-Verbindungen sowie Antioxidantien und / oder UV Absorber zum Einsatz kommen.

Als weitere Additive können Verlaufshilfsmittel und / oder Antistatika und / oder Thixotropiermittel und / oder Verdicker und / oder Biozide eingesetzt werden.

Die Photopolymerschicht B ist insbesondere eine solche, die nach dem Belichten mit UV-Strahlung einen mechanischen Modul Guv im Bereich zwischen 0,1 und 160 MPa aufweist. Insbesondere können die belichteten, holographischen Medien einen Modul Guv im Bereich zwischen 0,3 und 40, bevorzugt zwischen 0,7 und 15 MPa aufweisen.

Die Versiegelungsschicht C weist eine Dicke kleiner 50 µm auf und eine Viskosität von 2000 Pa s bis 2 Mio Pa s, vorzugsweise 4000 Pa s bis 1,6 Mio Pa s. Die Versiegelungsschicht C umfasst vor der Härtung mit aktinischer Strahlung ein ein physikalisch trocknendes Harz C1, wahlweise einen acrylfunktionellen Reaktivverdünner C2 und einen Photoinitiator C3. Bevorzugt weist die Versiegelungsschicht C zusätzlich einen UV Absorber in einer Menge von 0,1 bis 10 Gew. % auf.

Das physikalisch trocknende Harz C1 sind amorphe Thermoplaste, die bei Raumtemperatur fest bzw., glassartig sind und durch geeignete Lösemittel gelöst werden können, z.B. amorphe Polyesters, bevorzugt lineare Polyester;Polyesters (z.B. Dynacoll S1606, Evonik Industries AG, Marl, Deutschland); amorphe Polycarbonate (z.B. APEC 1895, Covestro DeutschlandBayer MaterialScience AG, Leverkusen, Deutschland), amorphe Polyacrylate, z.B. amorphes Polymethylmethacrylat (z.B: Degalan M825, oder Degalan M345,Degalan M920, Degacryl M547, Degacryl M727, Dagacryl MW730, Degacryl 6962 F, derbeide von Evonik Industries AG, Marl, Deutschland); amorphe Polystyrole, amorphe Polystyrolmethylmethacrylatcopolymere (z.B: NAS 90, NAS 21 der Styrolution Group GmbH, Frankfurt am Main, Deutschland), Styrolacrylnitrilcopolymer (z.B. Luran 358N der Styrolution Group GmbH, Frankfurt am Main, Deutschland).Acrylnitrilcopolymere und amorphe Acrylnitrilbutatiencopolymere (ABS). Weiterhin können auch acrylfunktionelle Polyacrylate, die z.B. solche, die aus der radikalischen Copolymerisation von monofunktionellen Acrylaten und Methacrylaten mit epoxyfunktionellen (Meth)acrylatmonomeren (z.B. Glycidylmethacrylat) herstellbar sind und die dann in einer anschließenden Epoxidaddition von Acrylsäure erhältlich sind (z.B. Ebecryl 1200, Allnex, Brüssel, Belgien, ein acrylfunktionelles Polyacrylat mit 4 Mol/kg Doppelbindungsdichte) verwendet werden. Ebenfalls ist es mögliche Epoxyacrylate (z.B. Addukte der Epoxide des Bisphenol-A mit Acrylsäure) zu verwenden. Bevorzugt sind amorphes Polymethylmethacrylat und acrylatfunktionelle Polyacrylate.

Der acrylfunktionelle Reaktivverdünner C2 enthält oder besteht aus einer oder mehreren strahlungshärtenden Verbindungen mit mindestens einer strahlungshärtende, radikalisch polymerisierbare Gruppe pro Molekül, wobei es sich bevorzugt um Acryl-, Methacryl-, Allyl-, Vinyl-, Maleinyl- und / oder Fumarylgruppen handelt, besonders bevorzugt um Acryl- und / oder Methacrylgruppen und ganz besonders bevorzugt um Acrylgruppen.

Acrylfunktionellee Reaktivverdünner C2 sind Verbindungen bevorzugt der Ester der Acryl- oder der Methacrylsäure mit aliphatischen Alkoholen, aliphatischen Ethern, die ebenfalls auch aromatische Teilstrukturen enthalten können.

Auswählte Beispiele mit einer Acrylatgruppe sind Caprolactonacrylat, Tetrahydrofurfurylacrylat, Oxyethyliertes Phenol-acrylate, monofunktionelle Epoxyacrylate, Phenoxyethylacrylat, Isobornylacrylat, Octylacrylat, Isooctylacrylat, Decylacrylat, Laurylacrylat, Tridecylacrylat, Isodecylacrylat, Stearylacrylat, Cyclotrimethylolpropanformalacrylat, Trimethylcyclohexylacrylat, Benzylacrylat, Phenylethoxyacrylat, Phenyldiethoxyacrylat, Phenyltetraethoxyacrylat, Nonylphenoltetraethoxyacrylat, Nonylphenoxyoctaethoxyacrylat, Nonylphenoldipropoxyacrylat.

Geeignete difunktionelle acrylfunktionellen Reaktivverdünner C2 sind Tricyclodecanedioldiacrylat, propoxyliertes Neopentylglycoldiacrylat, Dipropylenglycoldiacrylat, 1,6-Hexanedioldiacrylat, ethoxyliertes Hexanedioldiacrylat, Tripropyleneglycoldiacrylat, Hydroxylpivalinsäureneopentylatglycoldiacrylat, Neopentylglycoldipropoxydiacrylat, Tripropyleneglycoldiacrylat, Dipropylene glycoldiacrylat, Triethyleneglycoldiacrylat, ethoxyliertes Bisphenol-A-diacrylat, Tricyclodecanedimethanoldiacrylat, Tetraethyleneglycoldiacrylat, Polyethyleneglycoldiacrylat, Polyethylenglycoldiacrylate, Polypropylenglycoldiacrylate.

Geeignete trifunktionelle acrylfunktionelle Reaktivverdünner C2 sind Trimethylolpropane triacrylat, Trimethylolpropane (poly)ethoxytriacrylat, Glycerinpropoxyacrylat, Pentaerythrittriacrylat, Trimethylolpropane-tripropoxytriacrylat, Tris(2-hydroxyethyl)isocyanurat-triacrylat sowie allophanat basierte Urethanacrylate (z.B. Desmolux XP2740, der Fa. Allnex, Brüssel, Belgien).

Geeignete höherfunktionelle acrylfunktionelle Reaktivverdünner C2 sind Dipentaerythritpentaacrylat, Dipentaerythrithexaacrylat, Ditrimethylolpropantetraacrylat, ethoxiliertes Pentaerythri und tetraacrylatPentaerythrittetraacrylat, Glycerolpropoxylattriacrylat with 0,3-9 Propoxyeinheiten, Glycerolethoxylattriacrylat mit 0,3-9 Ethoxyeinheiten.

Weiterhin können auch die oben genannten Acrylsäureester als analoge Methacrylsäureester verwendet werden. Ebenfalls sind Mischungen der genannten Acrylate miteinander und der analogen Methacrylate untereinander und Mischungen von Acrylaten und Methacrylaten möglich.

Bevorzugt sind Ditrimethylolpropantetraacrylat, ethoxiliertes Pentaerythrittetraacrylat, Phenylethoxyacrylat, Phenyldiethoxyacrylat, Phenyltriethoxyacrylat, Phenyltetraethoxyacrylat, Nonylphenoltetraethoxyacrylat, Nonylphenoxyoctaethoxyacrylat, Nonylphenoldipropoxyacrylat. Besonders bevorzugt sind Ditrimethylolpropantetraacrylat und Phenyldi- und triethoxyacrylat.

Die eingesetzten Photoinitiatoren C3 sind üblicherweise durch aktinische Strahlung aktivierbare Verbindungen, die eine Polymerisation der entsprechender Gruppen auslösen können.

Bei den Photoinitiatoren C3 kann zwischen unimolekularen (Typ I) und bimolekularen (Typ II) Initiatoren unterschieden die eine radikalische Polymerisation auslösen, hier zu existiert ein breiter Stand der Technik.

Typ I-Photoinitiatoren (Norrish-Typ-I) für die radikalische Photopolymerisation bilden beim Bestrahlen durch eine unimolekulare Bindungsspaltung freie Radikale.

Beispiele für Typ I-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bis-imidazole, Aroylphosphinoxide, z.B. 2,4,6-Trimethyl-benzoyldiphenylphosphinoxid, Sulfonium- und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II- Photoinitiatoren zum Einsatz.

Bevorzugt werden 1-hydroxy-cyclohexyl-phenyl-keton (z.B. Irgacure® 184 der BASF SE), 2-hydroxy-2-methyl-1-phenyl-1-propanon (z.B. Irgacure® 1173 der BASF SE), 2-hydroxy-1-{4-[4-(2-hydroxy-2-methyl-propionyl)-benzyl]-phenyl}-2-methylpropan-1-on (z.B. Irgacure® 127 der BASF SE), 2-hydroxy-1-[4-(2-hydroxyethoxy)phenyl]-2-methyl-1-propanon (z.B. Irgacure® 2959 der BASF SE); 2,4,6-trimethylbenzoyl-diphenylphosphine oxide (z.B. Lucirin® TPO der BASF SE); 2,4,6-trimethylbenzoyl-diphenyl phosphinat (z.B. Lucirin® TPO-L der BASF SE), bis(2,4,6-trimethylbenzoyl)-phenylphosphineoxid (Lucirin® 819); [1-(4-phenylsulfanylbenzoyl)heptylideneamino]benzoat (z.B. Irgacure® OXE 01 der BASF SE); [1-[9-ethyl-6-(2-methylbenzoyl)carbazol-3-yl]ethylideneamino] acetat (z.B. Irgacure® OXE 02 der BASF SE) sowie deren Mischungen. Besonders bevorzugt sind 2-hydroxy-2-methyl-l-phenyl-l-propanon und 2,4,6-trimethylbenzoyl-diphenylphosphin oxide sowie deren Mischungen.

Typische UV Absorber sind Benzotriazole, Cyanoacrylate, Benzophenone, Phenyltriazine, Hydroxyphenyltrazine oder Oxalanilide.

Weiterhin können enthalten sein Lichtschutzmittel wie Phenole oder HALS Amine.Als Substratschicht D eignen sich mechanisch stabile thermoplastische Kunststoffsubstrate, insbesondere solche aus Polyester, wie z.B. Polyethylenterephtalat (PET) oder Polybutylenterephthalat, High impact Poly mit einer Schichtdicke von < 200 µm, < 100 µm und > 20 µm, vorzugsweise < 45 µm und >20 µm, die durch Oberflächenmodifikation in ihren Adhäsionseigenschaften reduziert wurden. Hierfür kommen verschiedene Techniken in Betracht. So können anorganische Gleitadditive zugesetzt werden, wie z.B. Kaolin, Ton, Bleicherde, Calciumcarbonat, Siliziumdioxid, Aluminiumoxid, Titanoxid, Calciumphosphat welche in bis zu 3% zugesetzt werden. Um die optischen Eigenschaften solcher Folien zu verbessern werden auch Dreischichtkoextrudatfilme verwendet, bei denen nur die äußeren Schichten derartige anorganische Gleitadditive enthalten (z.B Hostaphan RNK). Weiterhin können auch Silikone auf die Oberflächen aufgebracht werden, die die Oberflächenspannung und damit die Hafteigenschaften reduzieren.

Auch offenbart ist die Verwendung des Versiegelungsfilms C zum Schutz eines Photopolymeren B.

Außerdem Gegenstand der Erfindung ist die Verwendung des oben beschriebenen Kit-of-parts für das ebenfalls oben beschriebene Verfahren zur Herstellung eines zumindest teilweise verbundenen Aufbaus aus mindestens 2 Schichten, enthaltend
a) ein flächig vorliegendes Photopolymer B enthaltend ein Volumenhologramm und
b) mindestens eine zumindest teilweise durch aktinische Strahlung gehärtete Versiegelungsschicht C,
   dadurch gekennzeichnet, dass
   - das ein Volumenhologram enthaltende Photopolymere B eine vernetzte Matrix umfasst;
   - die Versiegelungsschicht C eine Dicke kleiner 50 µm aufweist undeine Viskosität von 2000 Pa s bis 2 Mio Pa s, vorzugsweise 4000 Pa s bis 1,6 Mio Pa s aufweist und ein physikalisch trocknendes Harz C1, einen acryl- oder methacrylfunktionellen Reaktivverdünner C2 und einen Photoinitiator C3 umfasst;
   - und die Versiegelungschicht C auf das Phtotopolymer B laminiert wird und
   - danach mit aktinischer Strahlung gehärtet wird.

Auch offenbart ist ein versiegeltes holographisches Medium, dass durch das erfinderische Verfahren zur Herstellung eines zumindest teilweise verbundenen Aufbaus zugänglich ist. In einer Ausführungsform enthält des holographische Medium eine ein Hologram enthaltendes Photopolymerschicht mit einer Schichtdicke von 0.3 µm bis 500 µm, bevorzugt von 0.5 µm bis 200 µm und besonders bevorzugt von 1µm bis 100 µm.

Insbesondere kann das Hologramm ein Reflektions-, Transmissions-, In-Line-, Off-Axis-, Full-Aperture Transfer-, Weißlicht-Transmissions-, Denisyuk-, Off-Axis Reflektions- oder Edge-Lit Hologramm sowie ein holographisches Stereogramm und bevorzugt ein Reflektions-, Transmissions- oder Edge-Lit Hologramm sein.

Mögliche optische Funktionen der Hologramme entsprechen den optische Funktionen von Lichtelementen wie Linsen, Spiegel, Umlenkspiegel, Filter, Streuscheiben, gerichteten Streuelementen, Beugungselemente, Lichtleiter, Lichtlenker (waveguides), Projektionsscheiben und/oder Masken. Zudem können mehrere derartiger optischer Funktionen in einem solchen Hologramm kombiniert werden, z.B. so dass je nach Lichteinfall das Licht in eine andere Richtung abgebeugt wird. So kann man beispielweise mit derartigen Aufbauten autostereoskopische oder holographische elektronische Displays bauen, die es erlauben einen stereoskopischen visuellen Eindruck ohne weitere Hilfsmittel wie z.B. einer Polarisator- oder Shutterbrille zu erleben, der Verwendung in automobilen Head-up Displays oder Head-mounted Displays.

Häufig zeigen diese optischen Elemente eine spezifische Frequenzselektivität, je nachdem wie die Hologramme belichtet wurden und welche Dimensionen das Hologramm hat. Dies ist insbesondere wichtig, wenn man monochromatische Lichtquellen wie LED oder Laserlicht verwendet. So benötigt man ein Hologramm pro Komplementärfarbe (RGB), um Licht frequenzselektiv zu lenken und gleichzeitig vollfarbige Displays zu ermöglichen. Daher sind in bestimmten Displayaufbauten mehrer Hologramme ineinander im Medium zu belichten.

Zudem können mittels der versiegelten holophaphischen Medien auch holographische Bilder oder Darstellungen, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten hergestellt werden. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendung dar. Auch ist es möglich derartige Hologramme zur Speicherung digitaler Daten zu verwenden, wobei verschiedenste Belichtungsverfahren (Shift-, Spatial- oder Angular- Multiplexing) verwendet werden.

Auch offenbart ist eine optische Anzeige, umfassend ein holographisches Medium.

Beispiele für derartige optische Anzeigen sind bildgebende Anzeigen auf Basis von Flüssigkristallen, organischen lichtemittierenden Dioden (OLED), LED-Displaytafeln, Microelektromechanische Systeme (MEMS) auf Basis von diffraktiver Lichtselektion, Electrowettingdisplays (E-ink) und Plasmabildschirmen. Derartige optische Anzeigen können autostereoskopische und/oder holographische Displays, transmittive und reflektive Projektionsleinwände oder Projektionsscheiben, Displays mit schaltbaren eingeschränkten Abstrahlverhalten für Privacyfilter und bidirektionalen Multiuserbildschirmen, virtuelle Bildschirme, Head-up-Displays, Head-mounted Displays, Leuchtsymbole, Warnlampen, Signallampen, Scheinwerfer und Schautafeln sein.

Auch offenbart sind autostereoskopische und/oder holographische Displays, Projektionsleinwände, Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln umfassend ein erfindungsgemäßes holographisches Medium.

Auch offenbart sind ein Sicherheitsdokument und ein holographisch optisches Element umfassend ein erfindungsgemäßes holographisches Medium.

Darüber hinaus ist auch die Verwendung eines erfindungsgemäßen holographischen Mediums zur Herstellung von Chipkarten, Ausweisdokumenten, 3D-Bildern, Produktschutzetiketten, Labeln, Banknoten oder holographisch optischen Elementen insbesondere für optische Anzeigen offenbart.

### Beispiele

Die Erfindung wird im Folgenden anhand von Beispielen näher erläutert.
Fig. 1 zeigt das Transmissionsspektrum eines Reflektionshologramm, das bei 532 nm aufgenommen wurde.
Fig. 2 zeigt das Transmissionsspektrum des Reflektionshologramms aus Fig. 1 nach der Verklebung mit einem OCA (OCA-69604, ein UV härtender Optical Clear Adhesive der Fa.
Tesa SE, Norderstedt, Deutschland).
Fig. 3 zeigt das Transmissionspektrum des Testhologramms zu Beispiel 1 der Tabelle 2 vor der Versiegelung.
Fig. 4 zeigt das Transmissionspektrum des Testhologramms zu Beispiel 1 der Tabelle 2 nach der Versiegelung.
Fig. 5 zeigt das Transmissionspektrum des Testhologramms zu Beispiel 1 der Tabelle 2 nach der Versiegelung und nach einer Temperaturbelastung von 24 Stunden / 60°C.

### Viskositätsmessung

Die Probenvorbereitung zur Bestimmung der Viskosität der Versiegelungsschicht C erfolgte durch Ausgiessen einer entsprechenden Lösung gemäß Tabelle 1 bestehend aus physikalisch trocknendem Harz C1 und Reaktivverdünner C2 gelöst im dort angegebenen organischen Lösemittel auf ein planparalleles Teflonpfännchen. Anschließend wurde im Vakuumtrockenschrank bei bis zu 60°C getrocknet. Der entstandene, lösemittelgeruchsfreie Film von einer Dicke von ca. 1 mm wurde ausgeschnitten und an einem "Ares" Viskosimeter der Fa. Rheometrix vermessen. Im Frequency-Sweep Modus und in einer bei 25°C temperierten Kammer verschlossenem Platte-Platte Aufbau (Durchmesser der Meßplatten von 14 mm) wurde die Viskosität gemessen und für 1 Hz angegeben.

### Chemikalien:

In eckigen Klammern ist jeweils, soweit bekannt, die CAS-Nummer angegeben.

### Rohstoffe der Photopolymerschicht B

| | |
|---|---|
| 2-Hydroxyethylacrylat | [818-61-1]-Sigma-Aldrich Chemie GmbH Steinheim, Deutschland |
| 2,6-Di-tert.-butyl-4-methylphenol | [128-37-0] - Merck KGaA, Darmstadt, Germany |
| 3-(Methylthio)phenylisocyanat | [28479-19-8] - Sigma-Aldrich Chemie GmbH Steinheim, Deutschland |
| Desmodur® RFE | Tris(p-isocyanatophenyl)thiophosphat, 27%-ig in Ethylacetat, Produkt der Covestro DeutschlandAG, Leverkusen, Deutschland |
| Dibutylzinndilaurat | [77-58-7] - Sigma-Aldrich Chemie GmbH Steinheim, Deutschland |
| Fomrez® UL 28 | Momentive Performance Chemicals, Wilton, CT, USA. |
| Borchi® Kat 22 | [85203-81-2]-OMG Borchers GmbH, Langenfeld, Deutschland. |
| BYK-310 | BYK-Chemie GmbH, Wesel, Deutschland |
| Desmodur® N 3900 | Covestro DeutschlandAG, Leverkusen, DE, Hexandiisocyanatbasiertes Polyisocyanat, Anteil an Iminooxadiazindion mindestens 30 %, NCO-Gehalt: 23.5 %. |
| Desmorapid® SO | [301-10-0] - Rhein Chemie Rheinau GmbH, Mannheim, Deutschland |
| CGI-909 | Tetrabutylammonium-tris(3-chlor-4-methylphenyl)-(hexyl)borat, [1147315-11-4], BASF SE |
| Trimethylhexamethylendiisocyanat | [28679-16-5] - ABCR GmbH & Co KG, Karlsruhe, Deutschland |
| 1H,1H-7H-Perfluorheptan-1-ol | [335-99-9] - ABCR GmbH & Co KG, Karlsruhe, Deutschland |
| Astrazon Rosa FG 200% | [3648-36-0] - DyStar Colours Deutschland GmbH, Frankfurt am Main, Deutschland |
| Natrium-bis(2-ethylhexyl)sulfosuccinat | [45297-26-5] Sigma-Aldrich Chemie GmbH, Steinheim, Deutschland |
| Polytetrahydrofuranpolyetherpolyols | |

### Rohstoffe der Versiegelungsschicht C

### Physikalisch trocknende Harze C1

| | |
|---|---|
| Ebecryl 1200 - Harz 1 | Ein ca. 10-fach acrylfunktionelles Polyacrylat der Fa. Allnex, Brüssel, Belgien. |
| Degalan M920 - Harz 2 | Ein lineares thermoplastisches, amorphes Polymethylmethacrylat mit einem Mw=300.000 der Fa. Evonik Industies, Marl, Deutschland der |
| APEC 1895 - Harz 3 | Ein lineares thermoplastisches Cyclohexanon-Bisphenol Polycarbonate der Covestro Deutschland AG, Leverkusen, Deutschland. |

### Acrylfunktionelle Reaktivverdünner C2

### Abkürzung RV = Reaktivverdünner

| | |
|---|---|
| Miramer M410 - RV 1 | [94108-97-1] Ditrimethylolpropantetraacrylat der Miwon Specialty Chemical Co., Ltd., Gyeonggi-do, Korea. |
| Miramer M4004 - RV 2 | [51728-26-8] 5-fach ethoxyliertes Pentaerythritoltetraacrylat der Miwon Specialty Chemical Co., Ltd., Gyeonggi-do, Korea. |
| Sartomer SR494 - RV 3 | 4-fach ethoxyliertes Pentaerythritoltetraacrylat(PPTTA) der SARTOMER Division der CRAY VALLEY, Paris, France. |
| Ebecryl 110 - RV 4 | Acrylat des ethoxilierten Phenols mit einem mittleren Ethoxilierungsgrad von ca. 2,5 der Fa. Allnex, Brüssel, Belgien. |
| Desmolux XP2740 - RV 5 | Flexibles, aliphatische Allophanat basiertes Urethanacrylate mit einer Arylate Funktionalität von drei, der Fa. Allnex, Brüssel |

### Photoinitiatoren C3

| | |
|---|---|
| Irgacure 2022 - Initiator 1 | Eine 80:20 Mischung aus 2-Hydroxy-2-methyl-1-phenyl-1-propanon und Bis(2,4,6-trimethylbenzoyl)-phenylphosphinoxid der Fa. BASF, SE, Ludwigshafen, Deutschland. |
| Irgacure 1173 - Initiator 2 | 2-Hydroxy-2-methyl-1-phenyl-1-propanon der Fa. BASF, SE, Ludwigshafen, Deutschland. |

### Additive

| | |
|---|---|
| BYK 310 - Verlaufsmittel | Silikonhaltiges Oberflächenadditiv der Fa. BYK-Chemie GmbH, Wesel, Deutschland |
| Tinuvin 292 - Lichtstabilisator | Ein sterisch gehindertes Amin der Fa. BASF SE, Ludwigshafen, Deutschland. |
| Irganox 1135 - Antioxidant | Ein phenolisches Antioxidanz der Fa. BASF SE, Ludwigshafen, Deutschland. |

### Lösemittel

| | |
|---|---|
| Butylacetat (BA) | Essigsäurebutylester der Brenntag GmbH, Mülheim an der Ruhr, Deutschland. |
| Methoxypropanol (MP) | 1-Methoxy-2-propanol der Brenntag GmbH, Mülheim an der Ruhr, Deutschland. |
| MPA-EEP (M/E) | Eine 50:50 Gew.-%-Mischung aus 1-Methoxy-2-propanolacetat (DOWANOL™ PMA GLYCOL ETHER ACETATE) der DOW Deutschland Anlagengesellschaft mbH, Schwalbach, Deutschland und Ethyl-3-Ethoxypropionat der Brenntag GmbH, Mülheim an der Ruhr, Deutschland. |

### Urethanacrylat 1: Phosphorothioyltris(oxybenzol-4,1-diylcarbamoyloxyethan-2,1-diyl)trisacrylat

In einem 500 mL Rundkolben wurden 0.1 g 2,6-Di-tert.-butyl-4-methylphenol, 0.05 g Dibutylzinndilaurat sowie und 213.1 g einer 27 %-igen Lösung von Tris(p-isocyanatophenyl)-thiophosphat in Ethylacetat (Desmodur® RFE, Produkt der Covestro DeutschlandAG, Leverkusen, Deutschland) vorgelegt und auf 60 °C erwärmt. Anschließend wurden 42.4 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt. Das Produkt wurde als teilkristalliner Feststoff erhalten.

### Urethanacrylat 2: 2-({[3-(Methylsulfanyl)phenyl]carbamoyl}oxy)ethylprop-2-enoat

In einem 100 mL Rundkolben wurden 0.02 g 2,6-Di-tert.-butyl-4-methylphenol, 0.01 g Dibutylzinndilaurat, 11.7 g 3-(Methylthio)phenylisocyanat vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0.1 % gesunken war. Danach wurde abgekühlt. Das Produkt wurde als farblose Flüssigkeit erhalten.

### Polyol-Komponente:

In einem 1 L Kolben wurden 0.037 g Desmorapid® SO, 374.8 g ε-Caprolacton und 374.8 g eines difunktionellen Polytetrahydrofuranpolyetherpolyols vorgelegt und auf 120 °C aufgeheizt und so lange auf dieser Temperatur gehalten, bis der Festgehalt (Anteil der nichtflüchtigen Bestandteile) bei 99.5 Gew.-% oder darüber lag. Anschließend wurde abgekühlt und das Produkt als wachsiger Feststoff erhalten.

### Farbstoff 1:

5.84 g wasserfreies Natrium-bis(2-ethylhexyl)sulfosuccinat wurden in 75 mL Essigsäureethylester gelöst. 14.5 g des Farbstoffs Astrazon Rosa FG 200%, gelöst in 50 mL Wasser, wurden zugesetzt. Die wässrige Phase wurde abgetrennt und die organische Phase wurde dreimal mit 50 ml frischem Wasser bei 50 °C verrührt und jedes Mal die wässrige Phase abgetrennt, die letzte bei Raumtemperatur. Nach Abtrennen der wässrigen Phase wurde das Lösungsmittels im Vakuum abdestilliert und man erhielt 8.6 g 3H-Indolium, 2-[2-[4-[(2-chloroethyl)methylamino]phenyl]ethenyl]-1,3,3-trimethyl-1,4-bis(2-ethylhexyl)sulfosuccinat [153952-28-4] als hochviskoses Öl.

### Fluoriertes Urethan: Bis(2,2,3,3,4,4,5,5,6,6,7,7-dodecafluoroheptyl)-(2,2,4-trimethyl-hexane-1,6-diyl) biscarbamat

In einem 6 L-Rundkolben wurden 0.50 g Dibutylzinndilaurat und 1200 g Trimethylhexamethylendiisocyanat vorgelegt und auf 80 °C erwärmt. Anschließend wurden 3798 g 1H,1H,7H-Perfluorheptan-1-ol zugetropft und die Mischung weiter auf 80 °C gehalten, bis der Isocyanatgehalt unter 0.1 % gesunken war. Danach wurde abgekühlt. Das Produkt wurde als farbloses Öl erhalten.

### Herstellung holographischer Medien (Photopolymerfolie)

7.90 g der oben beschriebenen Polyol-Komponente wurden aufgeschmolzen und mit 7.65 g des jeweiligen Urethanacylats 2, 2.57 g des oben beschriebenen Urethanacrylats 1, 5.10 g des oben beschriebenen fluorierten Urethans, 0.91 g CGI 909, 0.232 g des Farbstoff 1, 0.230 g BYK 310, 0.128 g Fomrez UL 28 und 3.789 g Ethylacetat gemischt, so dass eine klare Lösung erhalten wurde. Anschließend wurden 1.50 g Desmodur® N 3900 zugegeben und erneut gemischt.

Nun gab man diese Lösung in einer Rolle zu Rolle Beschichtungsanlage auf eine 36 µm dicke PET Folie, wo mittels eines Rakels das Produkt in einer Naßschichtdicke von 19 µm appliziert wurde. Bei einer Trocknungstemperatur von 85 °C und einer Trocknungszeit von 5 Minuten wurde die beschichtete Folie getrocknet und anschließend mit einer 40 µm dicken Polyethylenfolie geschützt. Anschließend wurde dieser Film lichtdicht verpackt.

### Herstellung und Charakterisierung von Testhologrammen

Testhologramme wurden wie folgt vorbereitet: die Photopolymerfolien wurden im Dunkeln auf die gewünschte Größe zurechtgeschnitten und mit Hilfe einer Gummiwalze auf eine Glasplatte der Maße 50 mm x 70 mm (3 mm Dicke) auflaminiert.

Die Herstellung von Testhologrammen erfolgt durch eine Testapparatur, die mittels grüner (532nm) Laserstrahlung Denisyuk-Reflektionshologrammen erzeugt. Die Testapparatur besteht aus einer Laserquelle, einem optischen Strahlführungssystem und einer Halterung für die Glascoupons. Die Halterung für die Glascoupons ist mit einem Winkel von 13° relativ 10 zur Strahlachse montiert. Die Laserquelle generierte die Strahlung, die über einen speziellen optischen Strahlengang auf ca 5cm aufgeweitet zum Glascoupon geführt wurde, der sich im optischen Kontakt zum Spiegel befand. Das holographierte Objekt war ein ca. 2cm x 2cm großer Spiegel, so dass bei der Rekonstruktion des Holograms die Wellenfront des Spiegels rekonstruiert wurde. Alle 15 Beispiele wurden mit einem grünen 532nm Laser (Newport Corp, Irvine, CA, USA, Best.- Nr. EXLSR-532-50-CDRH) belichtet. Mittels Verschlussblende wurde der Aufzeichnungsfilm definiert für 2 Sekunden belichtet. Anschließend wurden die Proben mit der Substratseite zur Lampe hin auf das Förderband eines UV-Strahlers gelegt und mit einer Bahngeschwindigkeit von 2,5 m/min zwei Mal belichtet. Als UV-Strahler wurde eine eisendotierte Hg-Lampe vom Typ Fusion UV type "D Bulb" No. 558434 KR 85 mit 80 W / cm² Gesamtleistungsdichte verwendet. Die Parameter entsprachen einer Dosis von 2 x 2,0 J/cm² (gemessen mit einem Light Bug des Typs ILT 490).

Diese diffraktive Reflexion lässt sich aufgrund der hohen Effizienz des Volumenhologramms mit sichtbarem Licht mit einem VIS-Spektrometer (USB 2000, Ocean Optics, Dunedin, FL, USA) in Transmission analysieren und erscheint im Transmissionsspektrum als Peak mit reduzierter Transmission. Über die Auswertung der Transmissionskurve lässt sich die Qualität des Hologramms feststellen: Die Breite des Peaks wurde als "Full width at half maximum" (FWHM) in Nanometern (nm) bestimmt, die Tiefe des Peaks (Tmin) wurde 30 als 100% - Tmin in Prozent angegeben, der Bereich mit niedrigster Transmission gibt die Wellenlänge (nm) höchster Beugungseffizienz an.

### Verklebung eines Reflexionshologramms mit einem Optical Clear Adhesive (OCA)

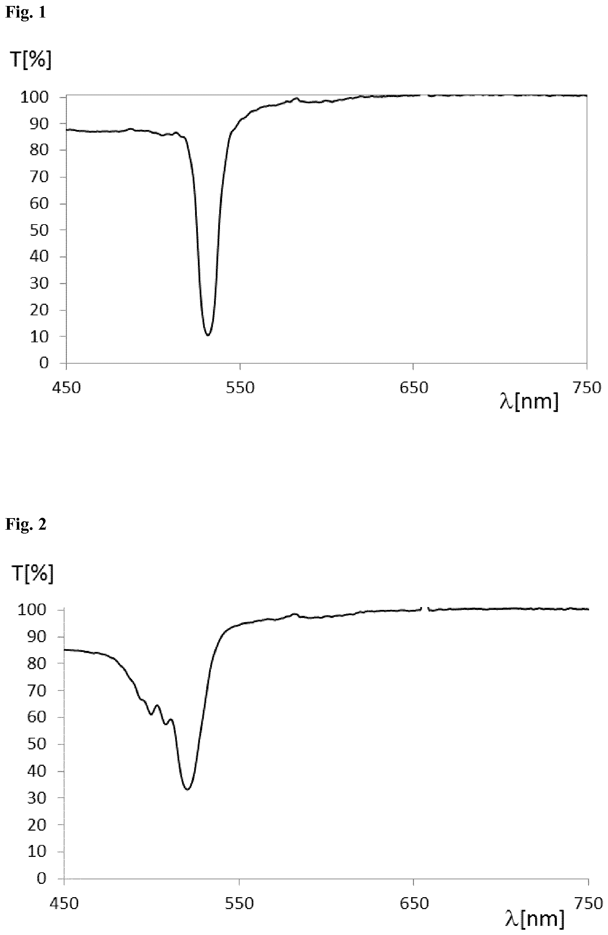

In der Displayindustrie sind optisch klare Klebstofffilme ("OCA", optical clear adhesive) gängig, die das Ankleben ("bonden") von Glasschichten an Displays z.B. für Touchfunktionen ermöglichen. Ein Versiegeln von Volumenhologrammen der oben beschriebenen Natur ist damit nur unter nicht akzeptablen Frequenzänderungen möglich. So zeigt Figur 1 das Transmissionsspektrum eines Reflektionshologramm, das bei 532 nm aufgenommen wurde. Nach der Verklebung mit einem solchen OCA (OCA-69604, ein UV härtender Optical Clear Adhesive der Fa. Tesa SE, Norderstedt, Deutschland) zeigt Figur 2 die sehr deutlichen Frequenzabweichungen, die eine industrielle Verwendung nicht erlauben.

### Herstellung der Versiegelungslackschicht C auf Substrat D

Die in der Tabelle 1 angegebenen Formulierungen wurden derart hergestellt, dass die physikalisch trocknenden Harze C1, gelöst in dem angegeben organischem Lösemittel, mit den Reaktivverdünner C2 gemischt wurden. Dann wurde im Dunkeln der Photoinitiator C3 sowie 0.9% Verlaufshilfsmittel und je 0.05% von Stabilisator 1 und Stabilisator 2 zugegeben. Die Lösung wurde auf 36 µm dicke Polyesterfolie aufgerakelt (RNK 36 der Fa. Mitsubishi Polyester Film GmbH, Wiesbaden, Deutschland) und 20 Minuten bei 60°C getrocknet, so dass ein Filmschichtdicke von 3-10 µm erhalten wurde.

**Tabelle 1: Kompositionen der Versiegelungsschicht C (erfinderische und nicht erfinderische Beispiele)**

| Erfindensche Beispiele | Komponente C1 | Komponente C2 | Komponente C3 | Festkörper und Lösemittel der Beschichtungslösung | Viskosität der Versiegelungsschicht [Pa s] |
|---|---|---|---|---|---|
| 1 | 69,5% Harz 1 | 29,5% RV 2 | 0,7% Initiator 1 und 0,3% Initiator 2 | 30,0% in BA | 10800 |
| 2 | 69,5% Harz 1 | 29,5% RV 2 | 0,3% Initiator 1 und 0,7% Initiator 2 | 30,0% in BA | 10800 |
| 3 | 94,5% Harz 1 | 4,5 % RV 4 | 1% Initiator 1 | 30,0% in BA | 83800 |
| 4 | 89,5% Harz 1 | 9,5% RV 4 | 1% Initiator 1 | 63,3% in BA | 5000 |
| 5 | 60% Harz 3 | 38% RV 1 | 1% Initiator 1 | 21,2% in M/E | 816400 |
| 6 | 40% Harz 3 | 58% RV 1 | 1% Initiator 1 | 28.8% in M/E | 16500 |
| 7 | 50% Harz 2 | 50% RV 1 | 3% Initiator 1 | 24.5% in MP | 40100 |
| 8 | 35% Harz 2 | 65% RV 1 | 1% Initiator 1 | 26.2% in MP | 11400 |
| 9 | 30% Harz 2 | 68% RV 1 | 1% Initiator 1 | 29,3% in MP | 8500 |
| 10 | 25% Harz 2 | 73% RV 1 | 1% Initiator 1 | 33,2% in MP | 4800 |
| 11 | 99% Harz 1 | - | 1% Initiator 1 | 55,5% in BA | 1534700 |
| 12 | 94% Harz 1 | 5% RV 5 | 1% Initiator 1 | 56,7% in BA | 257300 |
| 13 | 89% Harz 1 | 10% RV 5 | 1% Initiator 1 | 58,1% in BA | 401200 |
| 14 | 84% Harz 1 | 15% RV 5 | 1% Initiator 1 | 59,5% in BA | 279900 |
| 15 | 90% Harz 1 | 10% RV 3 | 1% Initiator 1 | 58,1% in BA | 202400 |
| 16 | 80% Harz 1 | 20% RV 3 | 1% Initiator 1 | 60,9% in BA | 68000 |
| 17 | 70% Harz 1 | 30% RV 3 | 1% Initiator 1 | 63,8% in BA | 11000 |
| Nicht erfinderische Beispiele | Komponente C1 | Komponente C2 | Komponente C3 | Lösemittel und FK | Viskosität [Pa s] |
| N1 | 10% Harz 2 | 88% RV 1 | 1% Initiator 1 | 55,4% in MP | 200 |
| N2 | 50% Harz 1 | 50% RV 4 | 1% Initiator 1 | 71,0% in BA | 30 |

Tabelle 2 zeigt nun Ergebnisse der Messungen zur Frequenzstabilität der Testhologramme mit den Versiegelungslacken 1-4 und 12-14. Hierbei wurden holografische Medien, die Testhologramme enthalten, die vorab mit VIS-Spektrometer chrakterisiert wurden (Spalte "Vor Verklebung" der Tabelle 2), mit dem entsprechenden Versiegelungslack zusammen laminiert, so dass der Schichtaufbaus A-B-C-D entstand. Innerhalb von 60 Sekunden wurde durch UV Licht (Schichtseite A orientiert zur UV Lampe, Bahngeschwindigkeit 2,5 m/min, Hg-Lampe vom Typ Fusion UV type "D Bulb" No. 558434 KR 85 mit 80 W / cm² Gesamtleistungsdichte, Dosis 2 J/cm2) gehärtet und anschließend die Schicht D entfernt. Wenn der Versiegelungslack C dabei auf der Photopolymerschicht B verbleibt und sich leicht von D trennen lässt, wird die Transferierbarkeit als "OK" bezeichnet. Erneut wird ein Transmissionspektrum gemessen (Spalte "Nach Verklebung" der Tabelle 2). Daraufhin wurden die Muster für 24 Stunden bei 60°C gelagert und erneut vermessen (Spalte "Nach Lagerung 1d 60°C" der Tabelle 2).

**Tabelle 2: Ausprüfungsergebnisse der Transferierbarkeit und Ergebnisse zu Farbverschiebungen gut haftender Versiegelungslacke**

| Beispiel | Vor Verklebung | Transferierbarkeit | Nach Verklebung | Nach Lagerung 1d 60°C | Shift durch Verklebung | Shift durch Lagerung 1d 60°C (trocken) |
|---|---|---|---|---|---|---|
| | **λₚₑₐₖ [nm]** | | **λₚₑₐₖ [nm]** | **λₚₑₐₖ [nm]** | **Δλₚₑₐₖ [nm]** | **Δλₚₑₐₖ [nm]** |
| 1 | 529.62 | OK | 534.59 | 531.68 | -4.97 | 2.06 |
| 2 | 530.45 | OK | 534.24 | 528.18 | -3.79 | -2.27 |
| 3 | 529.62 | OK | 532.16 | 529.00 | -2.54 | -0.62 |
| 4 | 530.45 | OK | 533.89 | 531.89 | -3.44 | 1.44 |
| 12 | 529.42 | OK | 527.56 | 524.26 | 1.86 | -5.16 |
| 13 | 528.18 | OK | 527.15 | 523.44 | 1.03 | -4.74 |
| 14 | 527.77 | OK | 527.97 | 523.85 | -0.20 | -3.92 |

Tabelle 2 zeigt nun, dass das erfinderische Verfahrung unter sehr guter Frequenzstabilität der Hologramme gelingt. Die Versiegelung sorgt für einen guten Schutz des Hologramms und eine gute Handhabbarkeit.

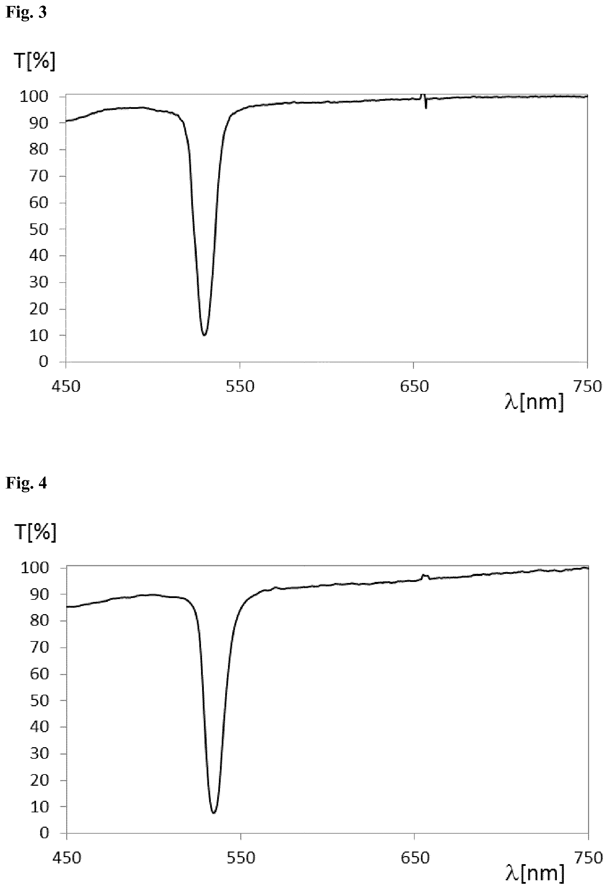

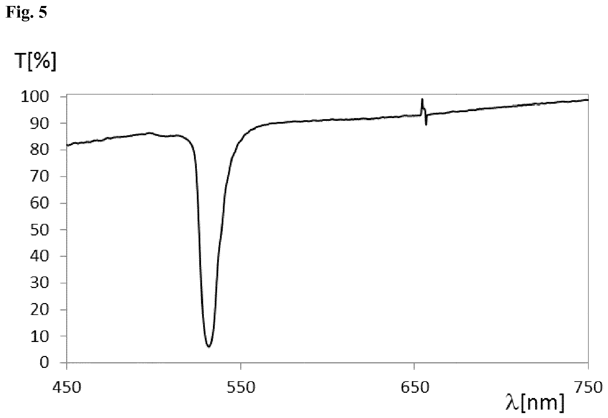

Figuren 3 bis 5 zeigen die Transmissionspektren der Testhologramme zu Beispiel 1 der Tabelle 2, die durch das erfinderische Verfahren aus einem Kit-of parts von Versiegelungsfilm und Photopolymerfilm vor der Versiegelung (Figur 3), nach der Versiegelung (Figur 4) und nach einer Temperaturbelastung von 24 Stunden / 60°C (Figur 5) gemessen wurden. Die Transmissionsspektren zeigen die hohe Stabilität des Hologramms ohne nachteilhafte Farbverschiebung (erkennbar an der Lage des Transmissionsminimums, das ebenfalls in Tabelle 2 angegeben ist).

Tabelle 3 zeigt weitere Prüfergebnisse gut haftender Versiegelungslacke. Wichtig für die industrielle Verwendbarkeit der Versiegelungsfilme aufgebaut aus Schicht C und Schicht D, ist die Filmeigenschaft nach Wickelung der Filme. Hierzu kann eine Kaschierfolie verwendet werden, um die Versiegelungsschicht C zu schützen. In den nicht erfindungsgemäßen Beispielen N1 und N2 gelingt dies nicht mehr, da die ungehärtete Schicht C bei der Kaschierung und/oder der Wickelung dieser Folien Wellen bildet. Dies führt zu unerwünschten unregelmäßigen Schutzschichtdicken, was nicht akzeptabel ist. Ebenso erweist sich eine zu hohe Klebrigkeit (Kriterium "klebrig") als ungeeignet, um ein konsistentes Laminierungsergebnis zu erhalten. In Spalte "Güte Filmeigenschaft" in Tabelle 3 ist eine Bewertung in einer Schulnotenskala angegeben ("1"- sehr gut, "2"-gut, "3"-befriedigend, "4 - ausreichend", "5 - mangelhaft").

**Tabelle 3 Verarbeitbarkeitsprüfung der Beispiel 5-19 sowie der nicht erfinderischen Beispiele N1 und N2 In einigen Beispielen wurde die Frequenzstabilität spektroskopisch bestimmt und angegeben.**

| Beispiel | Filmeigenschaften | Güte Filmeigenschaft | Bewertung Filmeigenschaft | Schichtdicke der Versiegelungsschicht C | Transferierbarkeit | Shift [nm] nach Lagerung 1d 60°C |
|---|---|---|---|---|---|---|
| 5 | klar trocken, | 1 | OK | 2-3 µm | OK | -1.44 |
| 6 | klar, sehr leicht klebrig | 2 | OK | 2-3 µm | OK | -1.44 |
| 7 | klar, sehr leicht klebrig | 2 | OK | nicht bestimmt | OK | nicht bestimmt |
| 8 | klar, sehr leicht klebrig | 2 | OK | 2-4 µm | OK | -6.18 |
| 9 | klar, leicht klebrig | 3 | OK | 3-4 µm | OK | -6.60 |
| 10 | klar, leicht klebrig | 3 | OK | 4-6 µm | OK | -4.12 |
| 11 | klar, trocken | 1 | OK | nicht bestimmt | OK | nicht bestimmt |
| 12 | trocken | 1 | OK | nicht bestimmt | OK | -5.16 |
| 13 | trocken | 1 | OK | nicht bestimmt | OK | -4.74 |
| 14 | klar, trocken, gummihaft | 1 | OK | nicht bestimmt | OK | -3.92 |
| 15 | klar, trocken | 1 | OK | nicht bestimmt | OK | nicht bestimmt |
| 16 | klar, sehr leicht klebrig | 2 | OK | nicht bestimmt | OK | nicht bestimmt |
| 17 | klar, leich klebrig | 2 | OK | nicht bestimmt | OK | nicht bestimmt |
| N1 | klebrig | 5 | nicht OK | 5-8 µm | OK | -5.19 |
| N2 | klar, leicht klebrig, Orangenhaut | 5 | nicht OK | nicht bestimmt | OK | nicht bestimmt |

Ein Vergleich der Tabellen 1, 2 und 3 ergibt, daß die geeigneten Versiegelungslacke eine Viskosität innerhalb von 2000 Pa s bis 2 Mio Pa s, vorzugsweise 4000 Pa s bis 1,6 Mio Pa s aufweisen und diese gut auf die Photopolymerschicht B transferierbar sind und eine gute Haftung aufweisen.

## Patentansprüche

1. Kit-of-parts enthaltend mindestens eine Versiegelungsschicht C und ein flächig vorliegendes Photopolymer B.

2. Verfahren zur Herstellung eines zumindest teilweise verbundenen Aufbaus aus mindestens 2 Schichten, enthaltend
a) ein flächig vorliegendes Photopolymer B enthaltend ein Volumenhologramm und
b) mindestens eine zumindest teilweise durch aktinische Strahlung gehärtete Versiegelungsschicht C,
**dadurch gekennzeichnet, dass**
- das ein Volumenhologram enthaltende Photopolymere B eine vernetzte Matrix umfasst;
- die Versiegelungsschicht C eine Dicke kleiner 50 µm aufweist und eine Viskosität, gemessen gemäß Messmethode wie in der Beschreibung erläutert, von 2000 Pa s bis 2 Mio Pa s, vorzugsweise 4000 Pa s bis 1,6 Mio Pa s aufweist und ein physikalisch trocknendes Harz C1, einen acryl- oder methacrylfunktionellen Reaktivverdünner C2 und einen Photoinitiator C3 umfasst;
- und die Versiegelungschicht C auf das Photopolymer B laminiert wird und
- danach mit aktinischer Strahlung gehärtet wird.

3. Kit-of-parts gemäß Anspruch 1 oder Verfahren gemäß Anspruch 2, **dadurch gekennzeichnet, dass** das Photopolymer B als Schicht vorliegt, vorzugsweise auf einer vorzugsweise transparenten thermoplastischen Substratfolie A oder auf einem anderen Träger.

4. Kit-of-parts gemäß Anspruch 1 oder Verfahren gemäß Ansprüch 2 bis 3, **dadurch gekennzeichnet, dass** die Versiegelungsschicht C auf einer Trägerfolie D vorliegt.

5. Verfahren gemäß Ansprüchen 2 bis 4, **dadurch gekennzeichnet, dass** eine weitere Versiegelungsschicht C auf die Rückseite des beidseitig flächig vorliegenden Photopolymeren B auflaminiert wird.

6. Verfahren gemäß Ansprüchen 2 bis 5, **dadurch gekennzeichnet, dass** ein zumindest teilweise verbundener Aufbau aus mindestens 3 Schichten enthaltend ein flächig vorliegendes Photopolymer B enthaltend ein Volumenhologramm, mindestens eine zumindest teilweise durch aktinische Strahlung gehärtete Versiegelungsschicht C und eine Trägerfolie D hergestellt wird.

7. Verfahren gemäß Ansprüchen 2 bis 4 und 6, **dadurch gekennzeichnet, dass** ein zumindest teilweise verbundener Aufbau aus mindestens 4 Schichten enthaltend eine auf eine Substratfolie A aufgebrachte, aus einem Photopolymer bestehende Schicht B enthaltend ein Volumenhologramm, mindestens eine zumindest teilweise durch aktinische Strahlung gehärtete Versiegelungsschicht C und eine Trägerfolie D hergestellt wird.

8. Verfahren gemäß Ansprüchen 2 bis 7, **dadurch gekennzeichnet, dass** die Versiegelungsschicht C nach der Laminierung auf die Photopolymerschicht B innerhalb von 60 Minuten, vorzugsweise innerhalb von 5 Minuten, besonders bevorzugt innerhalb weniger als 60 Sekunden zumindest teilweise aktinisch gehärtet wird.

9. Verfahren gemäß Ansprüchen 2 bis 8, **dadurch gekennzeichnet, dass** die Schicht D oder die Schichten D nach der zumindest teilweisen Aushärtung der Versiegelungsschicht C zumindest teilweise delaminiert werden.

10. Verwendung des Kit-of-parts gemäß Anspruch 1 für das Verfahren gemäß Ansprüchen 2 bis 9.

## Claims

1. Kit-of-parts comprising at least one sealing layer C and an areal photopolymer B.

2. Process for producing an at least partly interconnected setup formed of at least 2 layers comprising
a) an areal photopolymer B containing a volume hologram, and
b) at least one at least partly actinically cured sealing layer C,
**characterized in that**
- the photopolymer B containing a volume hologram comprises a crosslinked matrix;
- the sealing layer C is less than 50 µm in thickness and has a viscosity, measured by the measurement method as explained in the description, of 2000 Pa s to 2 million Pa s, preferably 4000 Pa s to 1.6 million Pa s and comprises a physically drying resin C1, an acryloyl- or methacryloyl-functional reactive diluent C2 and a photoinitiator C3;
- and the sealing layer C is laminated onto the photopolymer B and
- thereafter cured with actinic radiation.

3. Kit-of-parts according to Claim 1 or process according to Claim 2, **characterized in that** the photopolymer B is in the form of a layer, preferably on a preferably transparent thermoplastic substrate sheet A or on some other support.

4. Kit-of-parts according to Claim 1 or process according to Claims 2 and 3, **characterized in that** the sealing layer C is present on a supporting sheet D.

5. Process according to Claims 2 to 4, **characterized in that** a further sealing layer C is laminated onto the reverse side of the both-sidedly areal photopolymer B.

6. Process according to Claims 2 to 5, **characterized in that** an at least partly interconnected setup formed of at least 3 layers comprising an areal photopolymer B containing a volume hologram, at least one at least partly actinically cured sealing layer C and a supporting sheet D is produced.

7. Process according to Claims 2 to 4 and 6, **characterized in that** an at least partly interconnected setup formed of at least 4 layers comprising a layer B consisting of a photopolymer, containing a volume hologram and applied atop a substrate sheet A, at least one at least partly actinically cured sealing layer C and a supporting sheet D is produced.

8. Process according to Claims 2 to 7, **characterized in that** the sealing layer C post lamination onto the photopolymer layer B is at least partly actinically cured within 60 minutes, preferably within 5 minutes, more preferably within less than 60 seconds.

9. Process according to Claims 2 to 8, **characterized in that** the layer D or the layers D are at least partly delaminated post the at least partial curing of sealing layer C.

10. Use of the kit-of-parts according to Claim 1 for the process according to Claims 2 to 9.

## Revendications

1. Kit d'éléments contenant au moins une couche de scellement C et un photopolymère B qui se présente sous forme plane.

2. Procédé de fabrication d'une structure au moins partiellement reliée d'au moins 2 couches, contenant :
a) un photopolymère B qui se présente sous forme plane contenant un hologramme en volume, et
b) au moins un couche de scellement C au moins partiellement durcie par un rayonnement actinique,
**caractérisé en ce que**
- le photopolymère B contenant un hologramme en volume comprend une matrice réticulée ;
- la couche de scellement C présente une épaisseur inférieure à 50 µm et présente une viscosité, mesurée selon la méthode de mesure indiquée dans la description, de 2 000 Pa s à 2 millions Pa s, de préférence de 4 000 Pa s à 1,6 million Pa s, et comprend une résine C1 à séchage physique, un diluant réactif à fonction acrylique ou méthacrylique C2 et un photoinitiateur C3 ;
- et la couche de scellement C est stratifiée sur le photopolymère B, puis
- durcie avec un rayonnement actinique.

3. Kit d'éléments selon la revendication 1 ou procédé selon la revendication 2, **caractérisé en ce que** le photopolymère B se présente sous la forme d'une couche, de préférence sur un film substrat thermoplastique A de préférence transparent ou sur un autre support.

4. Kit d'éléments selon la revendication 1 ou procédé selon les revendications 2 à 3, **caractérisé en ce que** la couche de scellement C se présente sur un film support D.

5. Procédé selon les revendications 2 à 4, **caractérisé en ce qu'**une couche de scellement C supplémentaire est stratifiée sur le côté arrière du photopolymère B qui se présente sous forme plane sur les deux côtés.

6. Procédé selon les revendications 2 à 5, **caractérisé en ce qu'**une structure au moins partiellement reliée d'au moins 3 couches contenant un photopolymère B qui se présente sous forme plane contenant un hologramme en volume, au moins une couche de scellement C au moins partiellement durcie par un rayonnement actinique et un film support D est fabriquée.

7. Procédé selon les revendications 2 à 4 et 6, **caractérisé en ce qu'**une structure au moins partiellement reliée d'au moins 4 couches contenant une couche B constituée par un photopolymère contenant un hologramme en volume, appliquée sur un film substrat A, au moins une couche de scellement C au moins partiellement durcie par un rayonnement actinique et un film support D est fabriquée.

8. Procédé selon les revendications 2 à 7, **caractérisé en ce que** la couche de scellement C est au moins partiellement durcie actiniquement après la stratification sur la couche de photopolymère B en 60 minutes, de préférence en 5 minutes, de manière particulièrement préférée en moins de 60 secondes.

9. Procédé selon les revendications 2 à 8, **caractérisé en ce que** la couche D ou les couches D sont au moins partiellement délaminées après le durcissement au moins partiel de la couche de scellement C.

10. Utilisation du kit d'éléments selon la revendication 1 pour le procédé selon les revendications 2 à 9.
